# EUROPEAN PATENT APPLICATION

(11) **EP 2 120 457 A1**
(43) Date of publication of application: **18.11.2009**
(21) Application number: 08757887.8
(22) Date of filing: 30.06.2008
(51) Int. Cl.: H04N 7/15

(54) **A METHOD, RELATED SERVICE DEVICE AND SYSTEM FOR PROVIDING VIDEO CONTENT**

(30) Priority: 09.08.2007 CN 200710140545
(71) Applicant: Huawei Technologies Co., Ltd., Longgang District, Shenzhen Guangdong 518129 (CN)
(72) Inventor: MA, Hanjun, Shenzhen, Guangdong 518129 (CN); HUANG, Hui, Shenzhen, Guangdong 518129 (CN)
(74) Representative: Pfenning, Meinig & Partner GbR
(86) International application number: PCT/CN2008/071493
(87) International publication number: WO 2009/018738

(57) **Abstract**

A method for providing video content in a video conference is provided according to one embodiment of the present disclosure. The method includes sending, by a conference terminal, a video content access request to a video conference system, controlling a VOD proxy server to obtain video streams from a streaming media application system and providing the video streams to the video conference system. A method for providing video content for a video conference and a VOD proxy server, a video conference system and an integrated videoconferencing service system thereof are also provided according to embodiments of the present disclosure. According to the embodiments of the present disclosure, the video content in the course of a video conference is no longer subjected to the type of video sources coupled to the conference terminal. The conference terminal may introduce various video contents supported by the streaming media application system into the video conference. Accordingly, auxiliary functions of the video conference are enriched.

## Description

### FIELD OF THE INVENTION

The present disclosure relates to communication field, and more specifically, to a method for providing video content for a video conference, a method for providing video content in a video conference, and a video-on-demand (VOD) proxy server, a video conference system and an integrated videoconferencing service system thereof.

### BACKGROUND

Video conference is a communication service which provides via a transport channel a conference service at two or more places by employing a video technology and devices thereof.

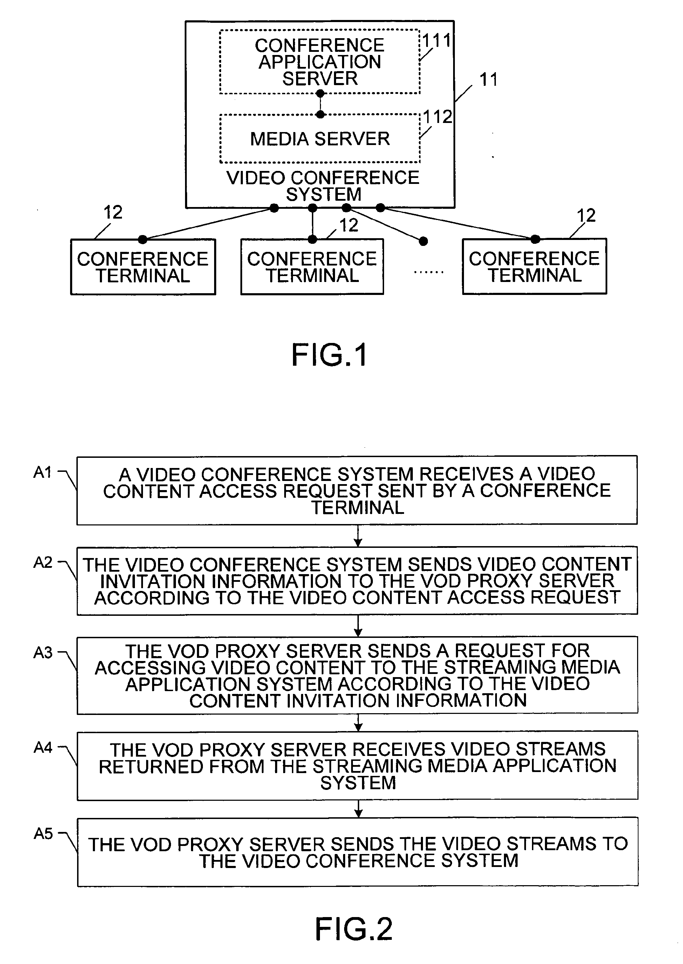

Figure 1 illustrates a current network diagram for a video conference service.
The network includes a video conference system 11 and a plurality of conference terminals 12 coupled to the video conference system 11. The video conference system 11 generally includes a conference application server 111 and a media server 112. Of course, in some tightly coupled systems, these two servers may also be integrated in a same service. The conference application server 111 controls conference resources and provides functions such as conference reservation, conference setup and tear-down, and user right control. The media server 112 receives a control command from the conference application server 111. After a synchronous separation, the media server extracts information such as audio, video, data from information streams from each conference site and sends the processed information to each conference terminal 12.

Auxiliary video contents may also be needed in the course of the video conference. For instance, in a training conference, a clip of tutorial video might need to be played. Or, in a company conference, a live stock roadshow might need to be played. Or, real-time monitoring information on traffic, important sites might be needed in the conference. Currently, a method for providing auxiliary video content in the video conference is to provide a plurality of video sources for a conference terminal. When a certain auxiliary video content needs to be inserted, the conference terminal may switch a video source. For instance, if a video content which needs to be provided is a video clip on a DVD disc, a DVD player has to be connected to the conference terminal as an auxiliary video source. When the video clip needs to be played, the conference terminal may switch the video source to the DVD player for playing the video clip.

During the research and practicing of the conventional methods, it is discovered that the video source, in a current method for providing video content in a video conference, is required to be physically connected to the conference terminal. Therefore, the video content to be provided is limited to the type of video sources, thus restricting the availability of the video content.

### SUMMARY

An integrated videoconferencing service system for flexibly introducing video contents is provided according to one embodiment of the present disclosure. The system includes:
a video conference system 52, configured to receive a video content access request sent from a conference terminal, send video content invitation information according to the video content access request, receive video streams returned according to the video content invitation information, and send the video streams to the conference terminal;
a VOD proxy server 53, configured to send a request for accessing video content according to the video content invitation information sent by the video conference system; receive the video streams returned according to the request for accessing video content; and send the video streams to the video conference system; and
a streaming media application system 54, configured to receive the request for accessing video content sent by the VOD proxy server and return video streams to the VOD proxy server according to the request for accessing video content.

A VOD proxy server is also provided. The VOD proxy server includes:
an invitation processing unit 31, configured to receive video content invitation information sent from a video conference system;
a VOD simulation unit 32, configured to send a request for accessing video content to a streaming media application system according to the video content invitation information and receive video streams returned from the streaming media application system;
a transmission processing unit 33, configured to send the video streams to the video conference system.

A video conference system is also provided. The video conference system includes:
a conference application server 41, configured to receive a video content access request sent by a conference terminal and send video content invitation information to a VOD proxy server according to the video content access request; and
a media server 42, configured to receive video streams returned according to the video content invitation information from the VOD proxy server, process the video streams into a format which is supported by the conference terminal, and send the processed video streams to the conference terminal.

A method for providing video content in a video conference is also provided according to one embodiment of the present disclosure. The method includes:
receiving a video content access request sent by a conference terminal;
sending video content invitation information to a VOD proxy server according to the video content access request; and
receiving video streams returned according to the video content invitation information from the VOD proxy server.

A method for providing video content for a video conference is provided according to one embodiment of the present disclosure. The method includes:
receiving video content invitation information sent by a video conference system;
sending a request for accessing video content to a streaming media application system according to the video content invitation information;
receiving video streams returned from the streaming media application system; and
sending the video streams to the video conference system.

According to embodiments of the present disclosure, the conference terminal sends a video content access request to the video conference system, controls the VOD proxy server to obtain video streams from the streaming media application system and provides the video streams to the video conference system. As such, the conference terminal may introduce various video contents supported by the streaming media application system flexibly to the video conference. Moreover, the video content is no longer limited to the type of the video sources coupled and auxiliary functions of the video conference are enriched.

### BRIEF DESCRIPTION OF THE DRAWINGS

Figure 1 is an existing network diagram for a video conference service;

Figure 2 is flowchart of a method for providing video content in a video conference according to a first embodiment;

Figure 3 illustrates a network diagram according to a second embodiment of the present disclosure;

Figure 4 is flowchart of a method for providing video content for a video conference according to a second embodiment;

Figure 5 is a schematic logic of an integrated videoconferencing service system according to a third embodiment of the present disclosure;

Figure 6 is a schematic logic of an integrated videoconferencing service system according to a fourth embodiment of the present disclosure;

Figure 7 is a schematic logic of a VOD proxy server according to a fifth embodiment of the present disclosure; and

Figure 8 is a schematic logic of a video conference system according to a sixth embodiment of the present disclosure.

### DETAILED DESCRIPTION

A method for providing video content in a video conference is provided according to one embodiment of the present disclosure. The method includes sending, by a conference terminal, a video content access request to a video conference system, controlling a VOD proxy server to obtain video streams from a streaming media application system and providing the video streams to the video conference system. A method for providing video content for a video conference is also provided according to one embodiment of the present disclosure. Further, an integrated videoconferencing service system, a VOD proxy server and a video conference system thereof are provided accordingly. The embodiments are detailed below.

First Embodiment: a method for providing video content in a video conference is illustrated in Figure 2. The method includes the following.

A1. A video conference system receives a video content access request sent by a conference terminal.

In the present embodiment, the video content is specified by a certain conference terminal wherein the video conference system utilizes a VOD proxy server to obtain the video content from a streaming media application system. If the video conference system regards the VOD proxy server as a special conference terminal, the process of a certain conference terminal sending a video content access request to have the VOD proxy server provide video streams to the video conference system is similar to a process of a certain conference terminal inviting a new conference terminal to participate the current video conference. Usually, a terminal in the video conference having the permission to invite a new member is a host terminal. Therefore, in this step, the terminal that sends the video content access request may be a host terminal of the current conference. The manner of sending such request may usually be in accordance with a method for inviting a new conference terminal. The sent video content access request may indicate the video content to be requested.

The conference terminal which sends the video content access request may indicate the video content to be requested by carrying connection information of the video content in the request, such as a Uniform Resource Locator (URL) of the content. The conference terminal may access the streaming media application system to acquire the URL of the video content to be requested in accordance with a general approach of a VOD service client obtaining program information. For instance, the conference terminal may employ a Hyper Text Transfer Protocol (HTTP) to access a streaming media application system via a browser. The conference terminal may select the video content requested on a page where the program information is presented, and then translate to obtain the associated URL connection information.

By the conference terminal accessing the streaming media application system to acquire the connection information of the video content to be requested, the video conference system may configure service authorization information of the streaming media application system to control the access right of the conference terminal. The details may be described as follows.

① The video conf erence system sends service authorization information to the streaming media application system. The video conference system may send the service authorization information in a manner which can be apprehended by any streaming media application system, for example, standard or private protocol recognized by both sides. The service authorization information primarily includes contents such as user ID, ID of an accessible service.

② The streaming media application system controls to provide accessible content to the conference terminal according to the service authorization information. For instance, the streaming media application system provides service content corresponding to the accessible service ID according to the ID of the user accessing the conference terminal. As such, the terminal user may only obtain the authorized video content.

A2. The video con ference system sends video content invitation information to the VOD proxy server according to the received video content access request.

The video conference system may regard the VOD proxy server as a special conference terminal and may send the video content invitation information to the VOD proxy server in such a manner as to invite a conference terminal to join the video conference. The video content invitation information may indicate the video content to be requested.

A3. The VOD proxy server sends a request for accessing video content to the streaming media application system according to the received video content invitation information.

The VOD proxy server may simulate the VOD client and initiate a request for the video content to the streaming media application system in a conventional VOD manner.

A4. The VOD proxy server receives video streams returned from the streaming media application system.

The streaming media application system regards the VOD proxy server as a common VOD client and handles the request in accordance with a conventional VOD manner and returns the video streams.

A5. The VOD proxy server sends the received video streams to the video conference system.

The VOD proxy server may provide the video streams obtained from the streaming media application system to the video conference system in such a manner as the VOD proxy server is being a conference terminal. Usually, since the video conference system and the streaming media application system adopt different methods for transporting and controlling media streams, the VOD proxy server may need to perform an associated protocol conversion when the video streams are being sent. The content for the conversion may include control signaling and media format, coding format and media stream encapsulation format, etc.

For instance, at a control plane for delivering the video streams, the conference control regarding the streaming media application system generally adopts RTSP while the conference control regarding the video conference system generally adopts H.323 series protocols. Therefore, a conversion from RTSP to H.323 conference control protocol needs to be performed at the VOD proxy server. At a bearer plane for delivering the video streams, the media format regarding the streaming media application system generally adopts MPEG-4/H.264 coding format while the video conference system generally adopts H. 263 format. Therefore, a conversion from MPEG-4/H.264 coding format to H. 263 coding format needs to be performed at the VOD proxy server.

After the video conference system receives the video streams sent from the VOD proxy server, the video conference system may process the media streams in accordance with a normal processing method, for instance, extracting the audio, video information, performing a mixing operation and terminal adaption, and delivering to the conference terminal.

The video conference system according to the present embodiment may include a conference application server and a media server. The conference application server may receive the video content access request sent from the conference terminal, send the video content invitation information to the VOD proxy server, and send the service authorization information to the streaming media application system, etc. The media server processes and distributes the video streams. Of course, in practice, these two servers may be integrated in a same hardware device.

The streaming media application system according to the present embodiment may include a streaming media application server and a streaming media server. The streaming media application server browses the content and controls the user right, etc. The streaming media server receives the request for accessing video content and transports real-time media streams, etc. Of course, in practice, these two servers may be integrated in a same hardware device.

According to the present embodiment, the conference terminal sends a video content access request to the video conference system, controls the VOD proxy server to obtain video streams from the streaming media application system and provides the video streams to the video conference system. As such, the conference terminal may introduce various video contents supported by the streaming media application system flexibly to the video conference, for instance, video courseware, videos, live programs, etc. The video content is no longer limited to the type of the video sources and auxiliary functions of the video conference are enriched. Further, the video conference system controls access right of the streaming media application system. Thus, the conference terminal can only obtain the authorized program content, which is beneficial to the setup of a unified integrated videoconferencing service system.

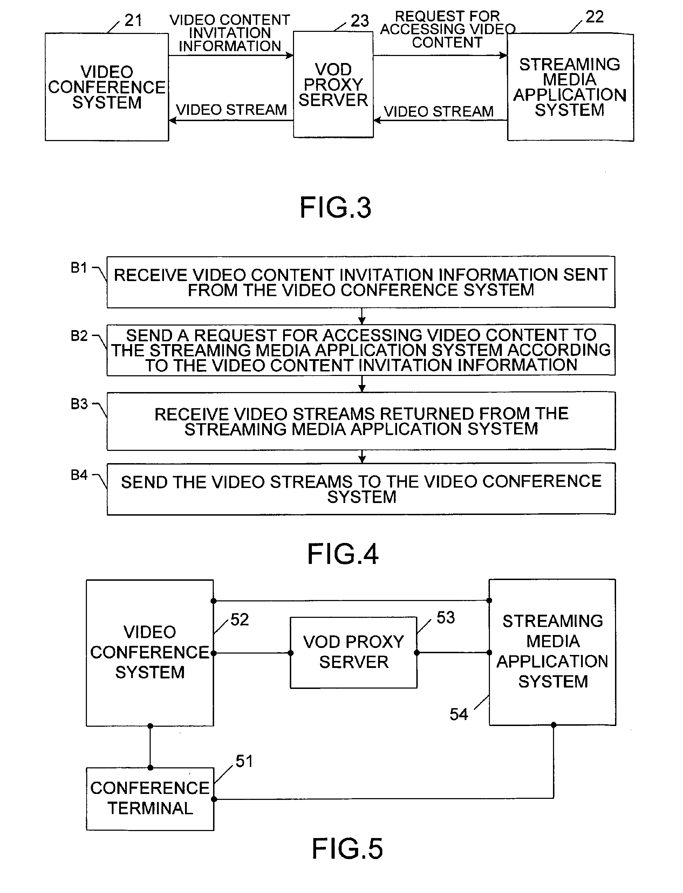

Second Embodiment: a method for providing video content for a video conference. The network structure is illustrated in Figure 3. In Figure 3, a video conference system 21 and a streaming media application system 22 are coupled to a VOD proxy server 23 together. The VOD proxy server 23 forwards the video content of the streaming media application system 22 to the video conference system 21. As illustrated in Figure 4, the procedure according to the present embodiment includes below steps.

B 1. Receiving video content invitation information sent from the video conference system

The VOD proxy server may serve as a special conference terminal to receive an invitation from the video conference system.

B2. Sending a request for accessing video content to the streaming media application system according to the received video content invitation information.

The VOD proxy server may simulate a common VOD client to initiate a request with the streaming media application system.

B3. Receiving video streams returned from the streaming media application system.

B4. Sending the video streams to the video conference system

Of course, the VOD proxy server may perform a corresponding protocol conversion according to the difference between the protocols used by the streaming media application system and the video conference system.

Steps B1∼B4 may refer to steps A2∼A5 in the first embodiment.

In the present embodiment, the video content invitation information of the video conference system is converted to the request for video content from the streaming media application system. Various video contents from the streaming media application system are provided for the video conference system. As such, the video content in the course of the video conference is no longer limited to the type of video source coupled to the conference terminal. The conference terminal may introduce various video contents supported by the streaming media application system flexibly to the video conference. Accordingly, the auxiliary functions of the video conference are enriched.

Systems and devices according to the embodiments of the present disclosure are illustrated below.

Third Embodiment: an integrated videoconferencing service system. As illustrated in Figure 5, the system includes: a conference terminal 51, a video conference system 52, a VOD proxy server 53, and a streaming media application system 54.

The conference terminal 51 is configured to send a video content access request to the video conference system 52, and configured to access a streaming media application system 54 to obtain connection information of the video content to be requested, and generate according to the connection information a video content access request sent to the video conference system 52.

The video conference system 52 is configured to receive the video content access request sent from the conference terminal 51, send video content invitation information to the VOD proxy server 53 according to the video content access request, receive video streams which are returned by the VOD proxy server 53 according to the video content invitation information, send the video streams to the conference terminal 51, and send service authorization information to the streaming media application system 54.

The VOD proxy server 53, configured to send a request for accessing video content to the streaming media application system 54 according to the video content invitation information sent by the video conference system 52; receive the video streams returned by the streaming media application system 54 according to the request for accessing video content; and send the video streams to the video conference system 52.

The streaming media application system 54 is configured to receive the request for accessing video content sent by the VOD proxy server 53, return video streams to the VOD proxy server 53 according to the request for accessing the video content, control to provide accessible content to the conference terminal 51 according to the service authorization information sent by the video conference system 52.

In the present embodiment, the integrated videoconferencing service system is configured to perform the method for providing video content in the video conference according to the first embodiment.

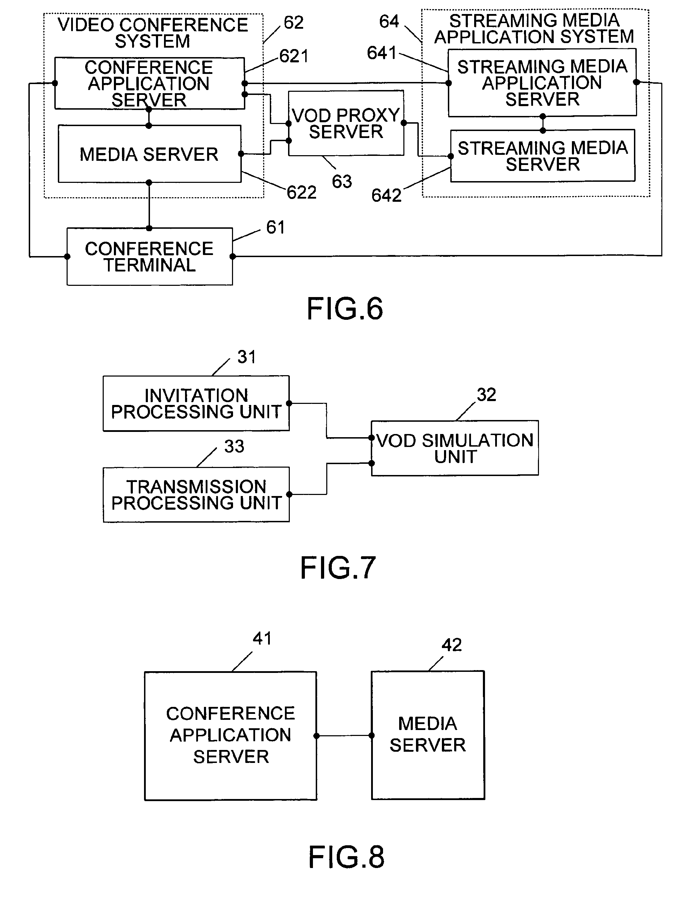

Fourth Embodiment: an integrated videoconferencing service system. As illustrated in Figure 6, the system includes: a conference terminal 61, a video conference system 62, a VOD proxy server 63, a streaming media application system 6. The video conference system 62 includes a conference application server 621 and a media server 622. The streaming media application system 64 includes a streaming application server 641 and a streaming media server 642.

The conference terminal 61 is configured to send a video content access request to the conference application server 621, and configured to access the streaming media application system 641 to obtain connection information of the video content to be requested, and generate a video content access request to be sent to the conference application server 621 according to the connection information.

The conference application server 621 is configured to send service authorization information to the streaming media application server 641, receive video content access request sent from the conference terminal 61, send video content invitation information to the VOD proxy server 63 according to the video content access request.

The media server 622 is configured to receive the video streams returned by the VOD proxy server 63 according to the video content invitation information sent by the conference application server 621 and send the video streams to the conference terminal 61.

The VOD proxy server 63 is configured to send a request for accessing video content to the streaming media server 642 according to the video content invitation information sent by the conference application server 621, receive the video streams which are returned by the streaming media server 642 according to the request for accessing video content, and send the video streams to the media server 622.

The streaming media application server 641 is configured to accept the access by the conference terminal 61, provide connection information of the video content, and control to provide accessible content to the conference terminal 61 according to the service authorization information sent by the conference application server 621.

The streaming media server 642 is configured to receive the request for accessing video content sent by the VOD proxy server 63 and return video streams to the VOD proxy server 63 according to the request for accessing video content.

In the present embodiment, the integrated videoconferencing service system is configured to perform the method for providing video content in the video conference according to the first embodiment.

Fifth Embodiment: a VOD proxy server. As illustrated in Figure 7, the VOD proxy server includes:
an invitation processing unit 31, configured to receive video content invitation information sent from a video conference system;
a VOD simulation unit 32, configured to send a request for accessing video content to a streaming media application system according to the video content invitation information obtained by the invitation processing unit 31 and receive the video streams returned from the streaming media application system;
a transmission processing unit 33, configured to send the video streams obtained by the VOD simulation unit 32 to the video conference system. Of course, the transmission processing unit 33 may perform a corresponding protocol conversion based on the difference between the protocols used by the streaming media application system and the video conference system coupled to the VOD proxy server.

In the present embodiment, the VOD proxy server may refer to the method for providing video content for the video conference according to the second embodiment.

Sixth Embodiment: a video conference system. As illustrated in Figure 8, the system includes:
a conference application server 41, configured to receive a video content access request sent by a conference terminal; send video content invitation information to a VOD proxy server according to the video content access request; and send service authorization information to the streaming media application system 54;
a media server 42, configured to receive video streams which are returned from the VOD proxy server according to the video content invitation information sent by the conference application server 41, process the video streams into a format which is supported by the conference terminal, and send the processed video streams to the conference terminal.

The video conference system according to the present embodiment can be applicable to the first and the second embodiments.

With the description of the foregoing embodiments, it is readily appreciated by those skilled in the art that the present embodiment may be implemented with software on a necessary hardware platform. Of course, the embodiment may also be implemented with hardware. But, most of the time, the former approach is more preferable. Based on this understanding, solutions provided by the present disclosure may be embodied in a software product. The computer software product may be stored in a readable storage media, such as a computer floppy disc, a hard disc or an optical disc, etc. The software product may include a set of instructions enabling a computer (may be a personal computer, a server, or a network device, etc.) to perform methods according to the embodiments of the present disclosure.

According to the foregoing embodiments, the conference terminal sends a video content access request to the video conference system, controls the VOD proxy server to obtain video streams from the streaming media application system and provides the video streams to the video conference system. As such, the conference terminal may introduce various video contents supported by the streaming media application system flexibly to the video conference. Moreover, the video content is no longer limited to the type of the video sources coupled and auxiliary functions of the video conference are enriched. Further, the video conference system controls access right of the streaming media application system. Thus, the conference terminal can only obtain the authorized program content, which is beneficial to the setup of a unified integrated videoconferencing service system.

A method for providing video content for a video conference, a method for providing video content in a video conference, a VOD proxy server, a video conference system and an integrated videoconferencing service system thereof are disclosed according to the embodiments of the present disclosure. Several specific examples are given to the present disclosure to illustrate the principle and implementation of the present disclosure. The description of the embodiments is intended merely to facilitate the understanding of the method and key ideas of the present disclosure. Further, it is readily appreciated by those skilled in the art that any modification can be made to the specific implementation and application with the spirit of the present disclosure. Accordingly, the content of the specification shall not be construed as a limitation to the present disclosure.

## Claims

1. An integrated video conferencing service system, **characterized in** comprising:
a video conference system (52), configured to receive a video content access request sent from a conference terminal, send video content invitation information according to the video content access request, receive video streams returned according to the video content invitation information, and send the video streams to the conference terminal (51);
a video-on-demand,VOD, proxy server (53), configured to send a request for accessing video content according to the video content invitation information sent by the video conference system (52); receive the video streams returned according to the request for accessing video content; and send the video streams to the video conference system (52); and
a streaming media application system (54), configured to receive the request for accessing video content sent by the VOD proxy server (53) and return video streams to the VOD proxy server (53) according to the request for accessing video content.

2. The integrated video conference system of claim 1, **characterized in** further comprising a conference terminal (51), wherein the conference terminal (51) is configured to access the streaming media application system (54) to obtain connection information of the video content to be requested, and generate based on the connection information the video content access request which is sent to the video conference system (52).

3. The integrated video conference system of claim 2, **characterized in that,**
the video conference system (52) is further configured to send service authorization information to the streaming media application system (54); and
the streaming media application system (54) is further configured to control to provide accessible content to the conference terminal (51) according to the service authorization information.

4. The integrated video conference system of claim 1, **characterized in that**, the streaming media application system comprises:
a streaming media application server, configured to accept the access by the conference terminal (51), provide connection information of the video content, and provide accessible content to the conference terminal (51) according to the service authorization information sent by the video conference system (52); and
a streaming media server, configured to receive the request for accessing video content sent by the VOD proxy server and return the video streams to the VOD proxy server according to the request for accessing video content.

5. A video-on-demand, VOD, proxy server, **characterized in** comprising:
an invitation processing unit (31), configured to receive video content invitation information sent by a video conference system;
a VOD simulation unit (32), configured to send a request for accessing video content to a streaming media application system according to the video content invitation information and receive video streams returned from the streaming media application system; and
a transmission processing unit (33), configured to send the video streams to the video conference system.

6. The VOD proxy server of claim 5, **characterized in that**, the transmission processing unit (33) is further configured to perform an associated protocol conversion when the video streams are being sent.

7. A video conference system, **characterized in** comprising:
a conference application server (41), configured to receive a video content access request sent by a conference terminal and send video content invitation information to a video-on-demand, VOD, proxy server according to the video content access request; and
a media server (42), configured to receive video streams which are returned from the VOD proxy server according to the video content invitation information, process the video streams into a format which is supported by the conference terminal, and send the processed video streams to the conference terminal.

8. The video conference system of claim 7, **characterized in that**, the conference application server (41) is further configured to send service authorization information to the streaming media application system (54).

9. A method for providing video content in a video conference, **characterized in** comprising:
receiving a video content access request sent by a conference terminal;
sending video content invitation information to a video-on-demand, VOD, proxy server according to the video content access request; and
receiving video streams returned according to the video content invitation information from the VOD proxy server.

10. The method of claim 9, **characterized in** further comprising:
sending service authorization information to a streaming media application system so that the streaming media application system controls to provide accessible content to the conference terminal according to the service authorization information.

11. The method of claim 9 or 10, **characterized in** further comprising:
processing the video streams into a format supported by the conference terminal and sending the processed video streams to the conference terminal.

12. A method for providing video content for a video conference, **characterized in** comprising:
receiving video content invitation information sent by a video conference system;
sending a request for accessing video content to a streaming media application system according to the video content invitation information;
receiving video streams returned from the streaming media application system; and
sending the video streams to the video conference system.

13. The method of claim 12, **characterized in that,** the step of sending the video streams to the video conference system comprises performing a protocol conversion on the received video streams returned from the streaming media application system and sending the converted video streams to the video conference system.
